# EUROPEAN PATENT APPLICATION

(11) **EP 1 406 437 A2**
(43) Date of publication of application: **07.04.2004**
(21) Application number: 03256116.9
(22) Date of filing: 29.09.2003
(51) Int. Cl.: H04N 5/44

(54) **Broadcast data receiver**

(30) Priority: 04.10.2002 GB 0223003
(71) Applicant: Pace Micro Technology PLC, Shipley, West Yorkshire BD18 3LF (GB)
(72) Inventor: Coates, Tim, Pudsey, West Yorkshire LS28 5QG (GB)
(74) Representative: Wood, Graham

(57) **Abstract**

A broadcast data receiver (BDR) (8) is provided of a type for receiving digital data from a broadcaster at a remote location and processing and decoding said data for display on a television display screen (4) connected to the BDR. The BDR communicates with a television display screen via a single SCART connector. The BDR is also capable of simultaneously being connected to at least one further electrical device (10), such as a VCR or DVD player via said single SCART connector.

## Description

The present invention relates to a broadcast data receiver (BDR), and particularly to a BDR forming part of a television system.

Although the following description refers almost exclusively to a television system comprising a television display screen, a BDR and a video cassette recorder (VCR), it will be appreciated by persons skilled in the art that the VCR can be any electrical device, and particularly although not necessarily exclusively any audio/video electrical device.

A BDR referred to in the present invention is typically of the type for receiving digital data from a broadcaster at a remote location via cable, satellite and/or terrestrial broadcast means. The BDR receives, decodes and processes the data to provide video, audio and/or auxiliary data for display on a television display screen connected thereto and/or for listening via speakers. VCRs can also be provided as part of a television system, in addition to the BDR and television display screen. The VCR is typically used to record one or more programmes and/or events being shown on the television onto a tape, disc or other recording medium.

In conventional television systems, in order to have the television display screen connected to a BDR and a VCR, the BDR is provided with two SCART sockets on a rear panel thereof; one SCART socket to allow a SCART lead to be connected to the television and one SCART socket to allow a SCART lead to be connected to the VCR. The requirement for the BDR to have two SCART sockets results in a large amount of circuitry required to switch and buffer the audio and video to the television display screen between the two sources, i.e. the VCR and BDR. In addition, as commercial pressure increases to reduce the size of a BDR, the space available on the rear panel of the BDR for SCART connections is reduced.

It is therefore an aim of the present invention to provide a BDR which overcomes the abovementioned problems.

It is a further aim of the present invention to provide a SCART lead which allows the abovementioned problems to be overcome.

According to a first aspect of the present invention there is provided a broadcast data receiver (BDR), said BDR receiving digital data from a broadcaster at a remote location and processing and decoding said data for display on a television display screen connected to the BDR, said BDR communicating with said television display screen via a SCART connector, said BDR capable of being simultaneously connected to at least one further electrical device, characterised in that said BDR allows communication between said television display screen and said at least one further electrical device via said SCART connector.

The advantage of the present invention is that only a single SCART connector is required for simultaneously connecting the television display screen and the further electrical device to the BDR, thereby reducing circuit complexity, the number of components required, the amount of space required on the back panel of the BDR and the expense of manufacturing the BDR.

Preferably the at least one further electrical device can include any or any combination of a stereo, video cassette recorder (VCR), DVD player, headphones, speakers and/or the like.

In a preferred embodiment the at least one further electrical device is a video/audio device such as a VCR or a DVD player.

Preferably at least pins 2, 20 and 6 of said SCART connector are used to allow communication between said television display screen and said further electrical device via said BDR.

Preferably the SCART connector includes a single SCART socket provided on the BDR. The SCART connector further includes a single SCART lead for connection with the SCART socket on the BDR and SCART sockets on the television display screen and further electrical device.

Pins 2, 6, and 20 on the BDR SCART socket are not normally used when the BDR connects with the TV SCART socket alone. However, in accordance with the present invention, these pins are used to input the right audio signal, the left audio signal and the composite video baseband signal (CVBS) from the further electrical device, i.e. audio/video device, to the television via the BDR.

Preferably a switch is provided in the BDR to allow the SCART connector or BDR SCART socket to be switched between a BDR operational mode and the further electrical device operational mode (i.e. to allow communication between the BDR and the television display screen, or the further electrical device and the television display screen via the BDR, respectively).

Further preferably the switch is an analogue switch. This analogue switch is provided using pin 8 of the SCART connector.

Preferably the switch provided by pin 8 is under the control of microprocessing means provided in the BDR. The switch between the BDR mode and the further electrical device mode (i.e. VCR loopthrough if the device is a VCR) can be undertaken automatically or via user intervention.

Preferably two general purpose input/output (GPIO) ports are used to manage pin 8 activity. One of the ports is set as an input and one of the ports is set as an output.

In the embodiment in which the processing means of the BDR actuates switching of the BDR between the further electrical device mode and the BDR mode automatically, this is undertaken by the detection of voltage in pin 8. If the voltage in BDR SCART socket pin 8 is low (i.e., the BDR is not driving the TV into A/V mode by driving the GPIO output port), the GPIO input monitors pin 8 voltage. If no further device is connected to the BDR or any device connected is not operational, the device SCART socket pin 8 voltage will be low. Once the device becomes operational, the device pin 8 voltage becomes high and this is detected by the GPIO input. The BDR processing means then changes the GPIO output which causes the analogue switch to move to a device mode or to perform device loopthrough via the BDR.

In the embodiment where the switch is actuated by user intervention, the user is required to select a pre-designated button from a remote control handset or other control means and/or make a selection from an on-screen menu display.

Preferably the SCART lead is a custom made SCART lead provided for connecting the BDR SCART socket to the further electrical device and TV SCART sockets. Thus, the SCART lead is provided with two plugs at a first end for connection with the device and television SCART sockets and one plug at a second end for connection to the BDR SCART socket.

In an embodiment when the further electrical device provides a Composite video baseband signal (CVBS), such as a VCR, the provision of one or two SCART loads (i.e. communication between the BDR and television or the VCR and television via the BDR respectively) on the CVBS video output can cause a variation in the amplitude of the CVBS depending on whether the VCR SCART plug of the SCART lead is connected to the VCR SCART socket.

In one embodiment, the variation in CVBS amplitude can be overcome by providing a programmable gain stage on the CVBS video output in the BDR (i.e. x 1 or x 2 depending on whether one or two SCART plugs are plugged in, such that 1 or 2 SCART loads are provided respectively). Alternatively, the requirement for programmable gain to be used is overcome if the video amplitude is adjusted to be approximately 5% high with only one SCART load plugged in and this will reduce to approximately 11% low when two SCART loads are plugged in.

According to a further aspect of the present invention there is provided a SCART lead, said SCART lead allowing communication between a BDR and a television display via SCART sockets provided thereon, said BDR receiving digital data from a broadcaster at a remote location and processing and decoding said data for display on said television display screen, and wherein said SCART lead allows communication between said television display screen, said BDR and at least one further electrical device.

According to a yet further aspect of the present invention there is provided a method for communication between an electrical device, television display screen and a BDR using a SCART connector which is capable of being connected simultaneously to said device, television display screen and said BDR.

Thus the advantages of the present invention is that it provides an interface between at least two items of audio/video equipment using only one output connection on the BDR. The cost of manufacture and the number of components required is reduced both within the BDR and the SCART cabling. In addition, a single SCART lead is neater in appearance and easier to install than two separate SCART leads. The present invention also provides a reduction in video amplitude variation which reduces the level of user intervention required in brightness adjustment when an option of one or two SCART loads is provided.

An embodiment of the present invention is now described with reference to the accompanying figures wherein:
Figure 1 illustrates the electrical devices forming a television system of the present invention in one embodiment;
Figure 2 is a block diagram illustrating the pin assignments between a SCART socket on the BDR and a SCART lead;
Figure 3 illustrates the pin assignments in a conventional SCART lead between a television and a BDR;
Figure 4 illustrates the pin assignments in a SCART lead according to the present invention.

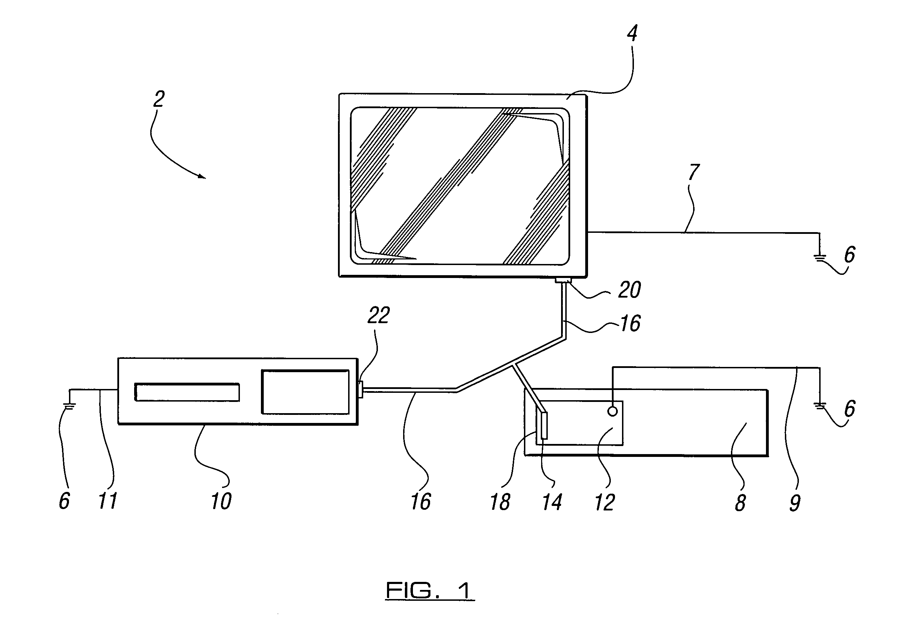

Referring firstly to figure 1, there is illustrated a television system 2 comprising a television display screen 4 connected to a power supply 6 via a lead 7, a BDR 8 (referred hereinafter as a Set Top Box (STB)) connected to the power supply 6 via a lead 9 and a VCR 10 also connected to a power supply 6 via a lead 11.

The STB is provided with a back panel 12 thereon on which a SCART socket 14 is provided. The STB SCART socket 14 communicates with the television (TV) 4 and VCR 10 via SCART lead 16. The SCART lead 16 is a single lead with a single plug at a first end 18 for connection with the STB socket 14, the lead 16 dividing into two plugs at a second end for connection to SCART sockets on the TV and VCR. This allows the STB to communicate with the TV or the VCR to communicate with the TV via the STB, thereby providing the advantages of the present invention as mentioned previously.

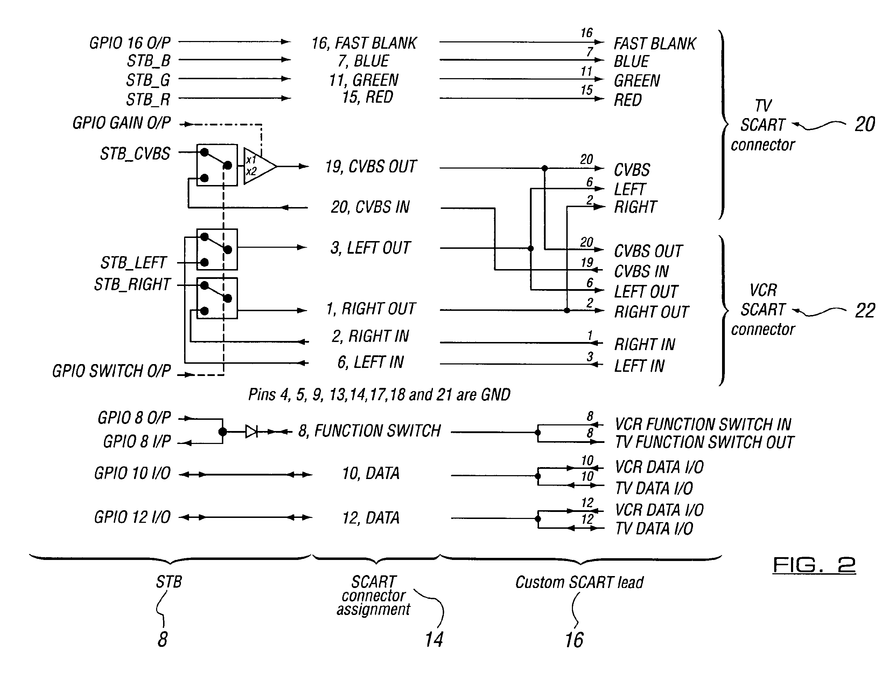

Figure 2 illustrates the pin assignments required in the STB 8, the STB SCART socket 14 and the SCART lead 16, 18 in one embodiment of the present invention. The SCART lead connections are shown as those required for the TV SCART plug 20 and the VCR SCART plug 22. The following pin assignments provide an output from the STB 8 to the television display screen 4 and include:
Pin 16 - Fast Blanking
Pin 7 - Blue Primary Colour
Pin 11 - Green Primary Colour
Pin 15 - Red Primary Colour

The following pin assignments are for bi-directional input/output (I/O) from the STB 8 to the television 4 and VCR 10, and include:
Pin 10 - Existing data protocol for allowing the STB to communicate between the TV 4 and VCR 10. This pin connection must not be broken.
Pin 12 - This pin is reserved for the same purposes as pin 10 but can be redundant. In the present invention pin 12 of the TV SCART can be linked to pin 12 of the VCR SCART.
Pin 8 is the function switch and is conventionally unidirectional. It is provided as having three levels, these levels being at 0 volts, 6 volts and 12 volts. A peripheral device, such as a VCR or a STB generates these signals and a receiver, such as TV, receives the signal therefrom. In the present invention, the analogue function switch provided by pin 8 is bi-directional.
Pin 19 is the CVBS output (CVBS out). Using the analogue function switch, pin 19 can source either the STB CVBS or the VCR CVBS. It can be provided with a variable gain stage after the analogue switch such that one termination (STB and TV only) or two terminations (TV and VCR via said BDR) can be properly driven.
Pin 3 is the left audio output (left out). Using the analogue function switch, pin 3 can source either STB LEFT or VCR left input (LEFT IN).
   Pin 1 is the right audio output (right out). Using the analogue function switch, pin 1 can source either STB RIGHT or VCR right input (RIGHT IN).

The analogue function switch provided by pin 8 is under the control of the central processor unit (CPU) of the STB and can switch between the STB mode output or the VCR loopthrough either automatically by detecting VCR pin 8 activity or via user intervention.

The SCART connector assignment details the pin definition of the SCART connectors as per the SCART specification (i.e. BS EN 50049-1).

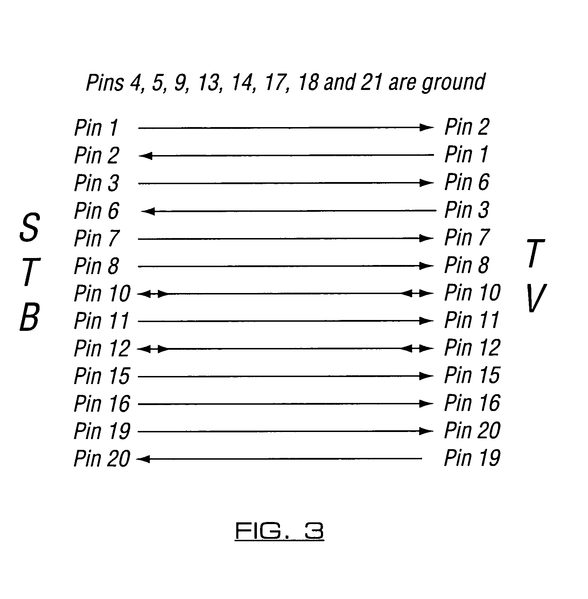

Referring to figure 3, there is illustrated a conventional SCART lead showing the connections made between, for example, a STB and a TV, via the SCART lead. It is noted that some of the signals in a SCART lead 'cross over' from one pin in a device to a different pin in a further device. For example, pin 1 of the STB, audio R crosses over inside the SCART lead to pin 2 of the TV, audio R, thereby allowing an output terminal on one device to connect to an input terminal on another device. Thus:
Pin 1 of the STB signals to pin 2 of the TV.
Pin 1 of the TV signals to pin 2 of the STB.
Pin 3 of the STB signals to pin 6 of the TV.
Pin 3 of the TV signals to pin 6 of the STB.
Pin 7 of the STB signals to Pin 7 of the TV.
Pin 8 of the STB signals to Pin 8 of the TV.
Pin 10 of the STB signals bi-directionally with pin 10 of the TV.
Pin 11 of the STB to pin 11 of the TV.
Pin 12 of the STB signals bi-directionally with pin 12 of the TV.
Pin 15 of the STB signals to pin 15 of the TV.
Pin 16 of the STB signals to pin 16 of the TV.
Pin 19 of the STB signals to pin 20 of the TV.
Pin 19 of the TV signals to pin 20 of the STB.

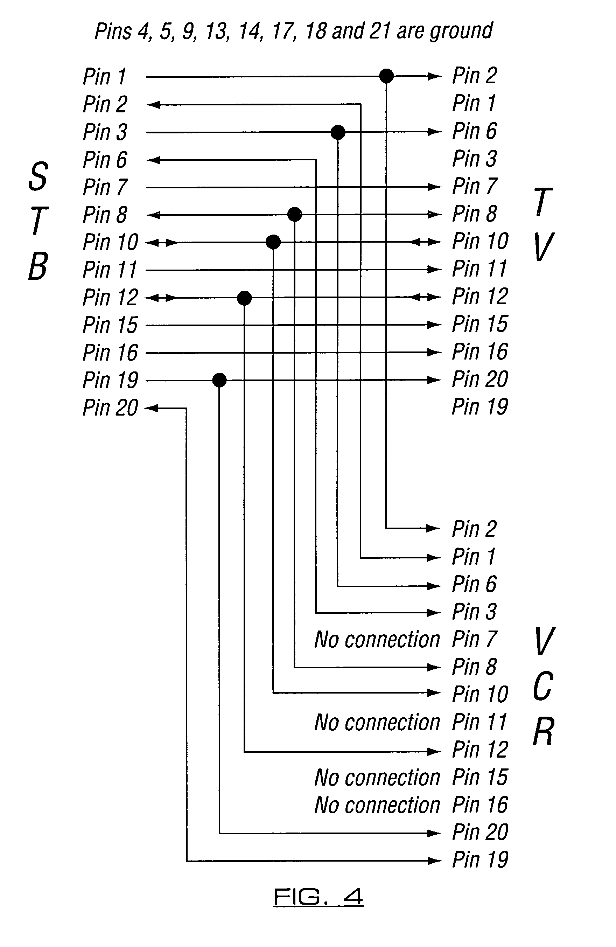

Figure 4 illustrates the changes made to the SCART lead to allow the present invention to function. Thus:
Pin 1 of the STB signals to pin 2 of the TV and VCR.
Pin 2 of the STB signals to pin 1 of the VCR.
Pin 3 of the STB signals to pin 6 of the TV and VCR.
Pin 6 of the STB signal to pin 3 of the VCR.
Pin 7 of the STB signals to pin 7 of the TV.
Pin 8 of the VCR signals uni-directionally with pin 8 of the TV and uni-directionally with pin 8 of the STB.
Pin 10 of the STB signals bi-directionally with pin 10 of the VCR and TV.
Pin 11 of the STB signals to pin 11 of the TV.
Pin 12 of the STB signals bi-directionally with pin 12 of the TV and VCR.
Pin 15 of the STB signals to pin 15 of the TV.
Pin 16 of the STB signals to pin 16 of the TV.
Pin 19 of the STB signals to pin 20 of the TV and VCR.
Pin 19 of the VCR signals to pin 20 of the STB.

In accordance with the present invention, the analogue switch on the STB can be actuated such that it performs a VCR loopthrough via the STB, thereby outputting VCR audio/video on the TV rather than outputting STB generated audio/video (A/V). As mentioned above, this switch is under the control of the STB CPU. Two general purpose input/output (GPIO) ports are used to manage pin 8 activity. One of the ports is set as an input and one of the ports is set as an output. The provision of these two ports allows two possible scenarios to take place:
1. If the BDR CPU has not forced the TV into A/V mode by driving the GPIO 8 O/P for pin 8 so the STB SCART pin 8 voltage is low, this enables the CPU GPIO 8 I/P pin to monitor pin 8 voltage. If no VCR is connected to the STB or if a VCR is connected to the STB but is not operational (i.e., playing back), the VCR SCART socket pin 8 voltage will be low. As soon as the VCR starts to play, the VCR will assert its pin 8 voltage high, and this increase in voltage is detected by the BDR GPIO 8 input. The BDR CPU can then change GPIO switch output (O/P) which will cause the analogue switch of pin 8 to perform VCR loopthrough via the BDR. This process occurs without a requirement for user intervention.
2. If the BDR has already forced the TV into A/V mode by driving the GPIO 8 O/P for pin 8 so the BDR SCART pin 8 voltage is high. This prevents the CPU GPIO 8 input from being able to monitor VCR SCART pin 8 voltage. In this case, the BDR CPU can only change GPIO switch output to cause the analogue switch to perform VCR loopthrough with user intervention. In order to do this, the user selects either a pre-designated button on the remote control handset of the television/BDR/VCR system makes a selection from an on screen menu display.

Conventionally, for all signals carried by a SCART lead, the SCART specification details all voltage levels and into what termination (or load) the signals should be measured. For example, with CVBS, the CVBS signal should be one volt (white level to synchronisation level) when terminated with a 75 ohm load. The termination resistor is inside the TV or VCR. If nothing is plugged into the BDR SCART the CVBS is unterminated and will measure two volts. When a TV display screen is connected to the BDR SCART, it is terminated properly and the CVBS will measure one volt.

In the present invention, two pieces of A/V equipment (i.e. the TV and VCR) are connected such that they both present a load to the BDR SCART pin 19 (CVBS). The termination resistance will be 37.5 ohms and the CVBS will be 0.5 volts. Thus, the CVBS signal has to be either amplified by a factor of two by a variable gain stage when it is driving two loads (by using GPIO GAIN O/P in figure 2), or the CVBS signal level can be deliberately set higher than one volt when only one load is connected. The CVBS signal level will drop to below one volt when two loads are connected. In both cases the CVBS level is within the required standard specification tolerance. In the case of the variable gain stage, the CPU is required to change the gain according to whether the user has configured the STB to connect to a VCR via an on screen display menu.

## Claims

1. A broadcast data receiver (BDR) (8), said BDR receiving digital data from a broadcaster at a remote location and processing and decoding said data for display on a television display screen (4) connected to the BDR, said BDR communicating with said television display screen via a SCART connector, said BDR capable of being simultaneously connected to at least one further electrical device (10), **characterised in that** said BDR allows communication between said television display screen and said at least one further electrical device via said SCART connector.

2. A BDR according to claim 1 **characterised in that** the at least one further electrical device is an audio and/or video device.

3. A BDR according to claim 2 **characterised in that** the audio and/or video device is any or any combination of a VCR, DVD player, headphones, telephone or speakers.

4. A BDR according to claim 1 **characterised in that** said SCART connector includes a single SCART socket (14) provided on the BDR.

5. A BDR according to claim 4 **characterised in that** said SCART connector further includes a single SCART lead (16) for connection between the SCART socket of the BDR and SCART sockets on the television display screen and the at least one further electrical device.

6. A BDR according to claim 1 **characterised in that** pins 2, 20 and 6 of said SCART connector are used to allow communication between said television display screen and said further electrical device via said BDR.

7. A BDR according to claim 6 **characterised in that** the pins 2, 6, and 20 are used to input a right audio signal, a left audio signal and the composite video baseband signal (CVBS) respectively from the further electrical device to the television screen.

8. A BDR according to claim 1 **characterised in that** a switch is provided in the BDR to allow the SCART connector to be moved between a BDR mode and a mode of operation of said further electrical device.

9. A BDR according to claim 8 **characterised in that** said switch is an analogue switch.

10. A BDR according to claim 8 **characterised in that** the movement of said switch between said modes of operation is undertaken automatically.

11. A BDR according to claim 8 **characterised in that** the movement of said switch between said modes of operation is undertaken by user actuated control means.

12. A BDR according to claim 11 **characterised in that** the user actuated control means includes remote control means and/or control means provided on the electrical device, BDR and/or television display screen.

13. A BDR according to any preceding claim **characterised in that** the switch is provided using pin 8 of the SCART connector.

14. A BDR according to any preceding claim **characterised in that** the voltage through pin 8 is monitored via monitoring means and micro-processing means provided in the BDR moves said switch between the BDR or further device operational modes depending on the voltage monitored.

15. A BDR according to any preceding claim **characterised in that** general purpose (GPIO) input and output ports are used to manage pin 8 activity.

16. A BDR according to any preceding claim **characterised in that** when the switch is provided in the BDR mode and the voltage in the GPIO output port is monitored as being low in pin 8 of the BDR SCART socket, the GPIO input port monitors pin 8 voltage.

17. A BDR according to claim 16 **characterised in that** once the further electrical device becomes operational or is moved to an operational condition, the voltage in pin 8 monitored by the GPIO input becomes high and the switch is moved to the device operational mode.

18. A BDR according to claim 16 **characterised in that** when the switch is provided in the BDR mode and the voltage in the GPIO output port is monitored as being high in pin 8 of the BDR SCART socket, in order to move the switch into a device operational mode, a user is required to manually actuate suitable control means.

19. A BDR according to any preceding claim **characterised in that** a programmable gain stage is provided on the CVBS video output in the BDR.

20. A BDR according to claim 19 **characterised in that** the CVBS video output is provided on pin 19.

21. A BDR according to claim 19 **characterised in that** the gain of the programmable gain stage is dependent on the number of SCART loads.

22. A BDR according to any preceding claim **characterised in that** the video amplitude in the BDR is adjusted to being approximately 5% high with only one SCART load present and 11% low when two SCART loads are present.

23. A SCART lead, said SCART lead allowing communication between a BDR and a television display screen via SCART sockets provided thereon, said BDR receiving digital data from a broadcaster at a remote location and processing and decoding said data for display on said television display screen, **characterised in that** said SCART lead allows communication between said television display screen, said BDR and at least one further electrical device.

24. A method of communication between an electrical device, television display screen and a BDR using a SCART connector, said SCART connector capable of being connected simultaneously to said device, television display screen and said BDR.
